# EUROPEAN PATENT APPLICATION

(11) **EP 3 578 243 A2**
(43) Date of publication of application: **11.12.2019**
(21) Application number: 18776966.6
(22) Date of filing: 29.03.2018
(51) Int. Cl.: B01D 39/00, B01D 46/00, B01D 35/30

(54) **FILTER ASSEMBLY**

(30) Priority: 30.03.2017 KR 20170040724
(71) Applicant: ARUN Co., Ltd., Incheon 21315 (KR)
(72) Inventor: OH, Soon-bong, Incheon 22001 (KR)
(74) Representative: Isarpatent
(86) International application number: PCT/KR2018/003684
(87) International publication number: WO 2018/182319

(57) **Abstract**

The present invention relates to a filter assembly in which a filter, having a plurality of micropores i.e. openings, which are open in a thickness direction thereof in a state of being extended horizontally or inclinedly with respect to a flow direction of a fluid containing solid foreign substances and have a tapered shape gradually narrowing from upstream ends to downstream ends thereof, is installed communicatively with an upstream end of a branch pipe interposed in a portion of a flow pipe through which the fluid containing the solid foreign substances flows so as to form, in conjunction with the flow pipe, a filtered flow path which passes through the filter and an unfiltered flow path which does not pass through the filter. Therefore, the problem can be solved.

## Description

### BACKGROUND

### TECHNICAL FIELD

The present invention relates to a filter assembly configured to filter solid materials such as fine particles and microorganisms, and more particularly, to a filter assembly having filtering holes which are not clogged by solid materials.

### BACKGROUND ART

A filter is formed by disposing a porous plate made in a plate shape or a tubular shape in a tubular portion through which a fluid flows, to filter foreign substances contained in the flowing fluid.

When such a filter is continuously applied to a filtering process, foreign substances are attached to and stuck in holes formed in the filter and the holes are clogged.

A filter for preventing such holes from being clogged is disclosed in Korean Patent Publication No. 10-2006-0037051.

The disclosed filter includes a cylindrical support frame having openings formed on a side surface thereof and a plurality of thin plates surrounding the side surface of the support frame and overlapping each other. Further, a plurality of micropores are formed in the thin plates, the micropores have minimum diameters at a central position in a thickness direction, and grooves configured to connect the micropores are formed on a surface of the thin plate, which is oppositing to a surface facing the support frame side, thereby improving filtering efficiency.

Further, in the disclosed filter, foreign substances stuck in the micropores are removed by a pulse of air which is ejected in a direction opposite to a filtering direction.

### SUMMARY

### Technical Problem

However, in the disclosed filter, the micropores formed in the filter are open in parallel to a direction in which a fluid is transferred, and inner walls formed to define the micropores have an hourglass shape, which is enlarged, reduced, and enlarged in a diameter thereof. Therefore, there is a problem in that the micropores need to be frequently backwashed by the pulse of air in a state in which a filtering process is stopped due to foreign substances often attaching to the inner walls of the micropores.

Furthermore, the disclosed filter has a problem in that the foreign substances attached to the inner walls of the micropores positioned at an upstream end in the filtering direction are not separated from the inner walls of the micropores by the backwash.

Objects of the present invention are to solve the above-mentioned problems.

### Solution to Problem

The present invention provides a filter assembly in which a filter, having a plurality of micropores i.e. openings, which are open in a thickness direction thereof in a state of being extended horizontally or inclinedly with respect to a flow direction of a fluid containing solid foreign substances and have a tapered shape gradually narrowing from upstream ends to downstream ends thereof, is installed communicatively with an upstream end of a branch pipe interposed in a portion of a flow pipe through which the fluid containing the solid foreign substances flows, so as to form, in conjunction with the flow pipe, a filtered flow path which passes through the filter and an unfiltered flow path which does not pass through the filter. Therefore, the problem can be solved.

### Advantageous Effects of Invention

In the present invention, by the above-described solution to the problems, the fluid containing the foreign substances is divided into a filtered fluid and an unfiltered fluid by the filter, comes into contact with exposed surfaces of upstream sides of the foreign substances stuck in the openings more than exposed surfaces of downstream sides of the foreign substances, so that the fluid flows faster on the exposed surfaces of the upstream sides than on the exposed surfaces of the downstream sides. Therefore, the foreign substances stuck in the openings are separated from the openings, due to a lift force which is based on a Bernoulli principle and is generated with respect to the foreign substances stuck to the openings. Accordingly, even when a filtering process for the fluid is performed for a long time, the openings formed in the filter may not be clogged, thereby providing effects that the filtering process can be continuously performed without replacing the filter or cleaning the filter.

### BRIEF DESCRIPTION OF THE DRAWINGS

FIG. 1 is an assembled perspective view of a filter assembly according to one embodiment of the present invention.
FIG. 2 is an exploded perspective view of the filter assembly of FIG. 1.
FIG. 3 is a conceptual diagram showing a filtering apparatus to which the filter assembly of FIG. 1 is applied.
FIGS. 4 to 8 are conceptual diagrams showing other embodiments of the filter assembly of FIG. 1.
FIG. 9 is a conceptual diagram showing still another embodiment of the filter assembly of FIG. 1 and the filtering apparatus of FIG. 3.
FIG. 10 is a conceptual diagram showing still another embodiment of the filter assembly of FIG. 1.
FIGS. 11 and 12 are conceptual diagrams showing still other embodiments of the filter assembly of FIG. 1.
FIG. 13 is a conceptual diagram showing still another embodiment of the filtering apparatus of FIG. 3.

### DESCRIPTION OF EXEMPLARY EMBODIMENTS

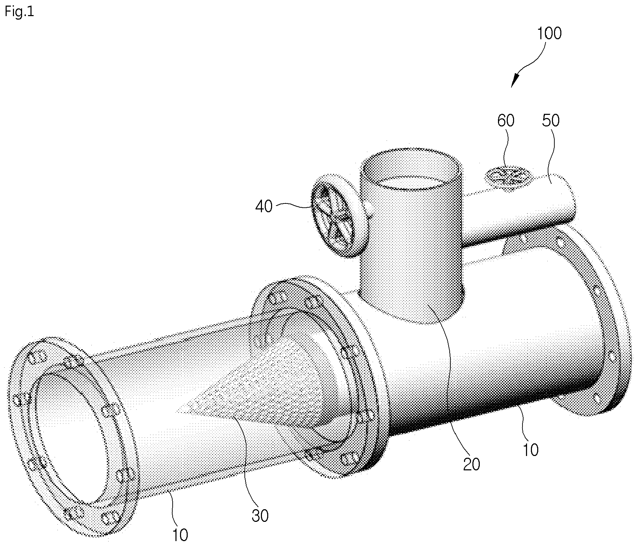

Hereinafter, a filter assembly according to one embodiment of the present invention will be described in detail with reference to FIGS. 1 to 3 attached in the present specification.

In FIG. 1, a filter assembly according to one embodiment of the present invention is indicated as numeral 100.

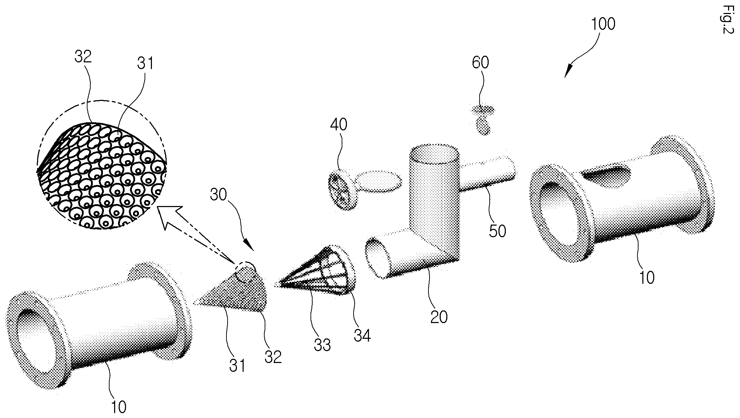

As shown in FIGS. 1 and 2, the filter assembly 100 includes: a flow pipe 10 communicably interposed in a portion of a transfer pipe (not shown) through which a fluid containing solid foreign substances is transferred; a branch pipe 20, for example, in a form of a pitot tube, having a size smaller than a size of the flow pipe 10 and being interposed in a part of the flow pipe 10 to form two flow paths in the flow pipe 10 in conjunction with the flow pipe 10, so that an upstream end of the branch pipe 20 is disposed inside the flow pipe 10 and a downstream end of the branch pipe 20 is disposed outside the flow pipe 10; a filter portion 30 connected to the upstream end of the branch pipe 20 disposed in the flow pipe 10, to inclinedly extend with respect to a direction in which a fluid flows and communicate with a downstream end of the flow pipe 10 at an upstream end of the flow pipe 10; a first valve 40 disposed on the downstream end of the branch pipe 20 disposed outside the flow pipe 10; a gas supply pipe 50 having a downstream end communicably connected to a downstream end portion of the branch pipe 20 positioned on an upstream side of the first valve 40, and an upstream end communicably connected to a gas supply source (now shown); and a second valve 60 interposed in a portion of the gas supply pipe 50.

The branch pipe 20 has a size and a shape to configure an unfiltered flow path for a fluid containing foreign substances which flow through the upstream end of the flow pipe 10 and do not pass through the filter portion 30 and a filtered flow path for a fluid from which foreign substances are filtered.

The filter portion 30 includes: a hollow conical filter 32 that has a plurality of micropores 31 formed in a lattice pattern with an interval of, for example, 1 µm or less, and is formed by bending a metal plate in a conical shape or by injection molding of a resin material so that a vertex portion thereof is disposed on an upstream side in the direction in which the fluid flows; a plurality of ribs 33 fixedly inscribed on the conical filter 32 to support the conical filter 32; and a connector 34 having an upstream end to which base ends of the plurality of ribs 33 are fixed and a downstream end communicably connected to the upstream end of the branch pipe 20.

The plurality of micropores 31 formed in the filter 32 are open in a thickness direction of the filter 32 and have a taper shape with a size which gradually decreases from upstream ends to downstream ends. For example, the size of the upstream end of each of the micropores 31 is in a range of 10 to 100 µm and the size of the downstream end of each of the micropores 31 is in a range of 1 to 10 µm.

A ratio of the size (width) on the base end side of the conical filter 32 to a length of the conical filter 32 in the flow direction is, for example, 1:2.

If the filter 32 is made of a metal, the filter 32 may be made of a nickel alloy material having excellent resistance to chemicals, and may be formed by plating the metal filter 32 made of the nickel alloy material with a tungsten alloy to a thickness of 0.5 to 5 µm by an electroless plating method to increase the resistance to chemicals to a higher level, or may be made of a resin material such as PP, PE, or PC having resistance to chemicals and durability.

The flow pipe 10 and the branch pipe 20 may be plated with a tungsten alloy to a thickness of 10 to 40 µm by an electroless plating method to increase corrosion resistance.

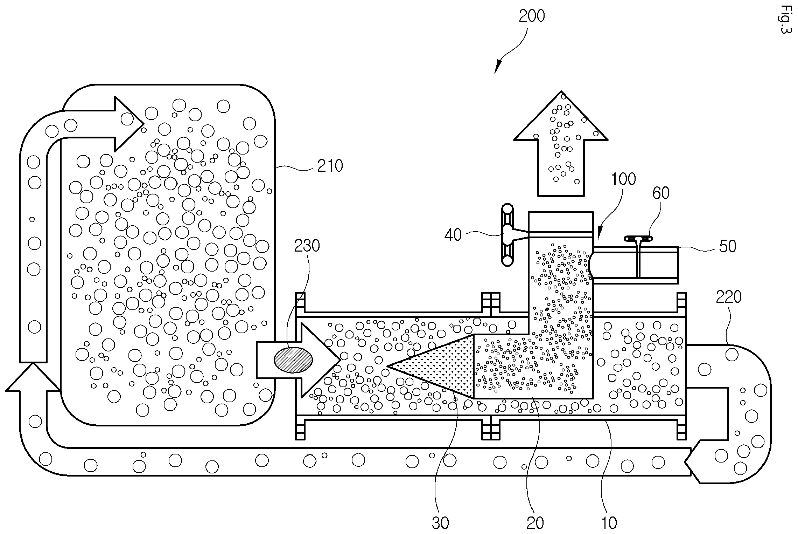

The filter assembly 100 configured as described above may be applied to a filtering apparatus 200, as shown in FIG. 3.

The filtering apparatus 200 includes: a pump 230 and the flow pipe 10 of the filter assembly 100, which are sequentially interposed, in the direction in which the fluids flows, in a portion of a circulation line 220 having an upstream end communicably connected to a lower portion of a fluid storage tank 210 storing the fluid and a downstream end communicably connected to an upper portion of the fluid storage tank 210; a filtered fluid storage tank (not shown) connected to the downstream end of the branch pipe 20 of the filter assembly 100; and a gas supply source (not shown) connected to an upstream end of the gas supply pipe 50 of the filter assembly 100.

The filtering apparatus 200, to which the filter assembly 100 configured as described above is applied, may be operated as follows.

First, when the pump 230 is operated in a state in which the first valve 40 opens and the second valve 60 closes, the fluid containing the solid foreign substances flows from the fluid storage tank 210 and goes to an upstream end of the flow pipe 10 to face the filter portion 30. Here, a fluid passing through the plurality of micropores 31 of the filter portion 30 among fluids transferred toward the filter portion 30 is transferred to the downstream end of the branch pipe 20 of the filter assembly 100 to be stored in the filtered fluid storage tank as a filtered fluid from which solid foreign substances of 10 µm or more are filtered. Further, a fluid which does not pass through the plurality of micropores 31 of the filter portion 30 among the fluids transferred toward the filter portion 30 is a fluid containing solid foreign substances of 10 µm or more, and a process of returning the fluid not passing through the plurality of micropores 31 to the fluid storage tank 210 through the downstream end of the flow pipe 10 and a downstream end of the circulation line 220 is repeated. Therefore, the fluid stored in the fluid storage tank 210 is supplied to the filtered fluid storage tank as the filtered fluid from which solid foreign substances of 10 µm or more are filtered.

When such a process is continued, the solid foreign substances may be stuck in the plurality of micropores 31 having the taper shape. However, an area with which the fluid not passing through the filter 32 and flowing along an outer surface of the filter 32 comes into contact with the solid foreign substances stuck in the micropores 31 is larger than an area with which the fluid passing through the filter 32 and flowing along an inner surface of the filter 32 comes into contact with the solid foreign substances stuck in the micropores 31. Therefore, the foreign substances stuck in the plurality of micropores are separated from the plurality of micropores due to a lift force which is generated with respect to the foreign substances stuck in the plurality of micropores, and return to the fluid storage tank 210. Accordingly, even when a filtering process for the fluid is performed for a long time, the plurality of micropores 31 formed in the filter portion 30 may not be clogged so that the filtering process can be continuously performed without replacing the filter or cleaning the filter.

Even when the plurality of micropores 31 formed in the filter portion 30 are clogged by the solid foreign substances, when the pump 230 is stopped, the first valve 40 is closed, and the second valve 60 is opened, for example, gas such as helium that is lighter than air passes through the filter portion 30 via the gas supply pipe 50 in reverse and enters the upstream end of the flow pipe 10, so that the filter portion 30 can be backwashed. Accordingly, the filter assembly 100 can provide an operational effect of continuously performing a filtering process without replacing the filter or a filter cleaning operation.

Also, since the filter 32 of the filter portion 30 is conical, collision between the fluid containing the solid foreign substances and the filter 32 is minimized, so that the flow of the fluid containing the solid foreign substances can be stably maintained.

When the size of a downstream end of the plurality of micropores 31 is 3 µm, drinking water (water not contaminated with chemicals on the ground) can be produced, and when the size thereof is in a range of 10 to 50 µm, ballast water can be produced.

Further, the filter assembly 100 and the filtering apparatus 200 having the same can be applied to a wastewater treatment process, a semiconductor process, other particle separation processes, or the like.

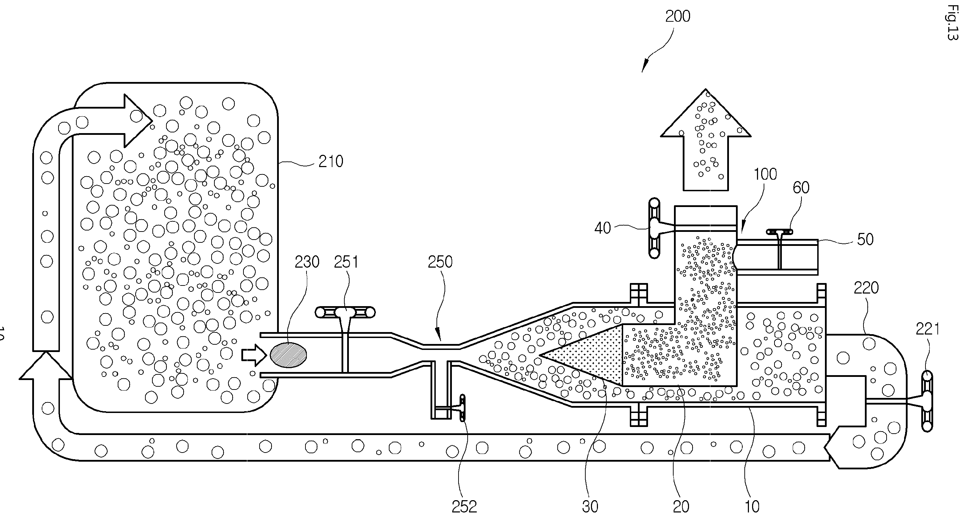

Although the flow pipe 10 of the filter assembly 100 is described as being directly connected to the pump 230 in the filtering apparatus 200 of the above-described embodiment, the present invention is not limited thereto, and in order to increase the lift force generated with respect to the foreign substances stuck in the plurality of micropores, as shown in FIG. 13, a venturi pipe 250 may be interposed between the pump 230 and the flow pipe 10.

If the venturi pipe 250 is interposed between the pump 230 and the flow pipe 10, a flow rate of the fluid containing the solid foreign substances discharged from the pump 230 rapidly increases as the fluid passes through the venturi pipe 250, and the fluid flows along the outer surface of the filter 32 to generate a larger lift force in the plurality of micropores. Therefore, it is preferable in that the foreign substances stuck in the plurality of micropores are further reliably separated from the plurality of micropores, and the plurality of micropores formed in the filter portion 30 are not further clogged.

In a case where the venturi pipe 250 is interposed between the pump 230 and the flow pipe 10, if a third valve 221 is installed in a portion of the circulation line 220 positioned on the downstream side of the flow pipe 10, a fourth valve 251 is installed at a first inlet of the venturi pipe 250 connected to a discharge side of the pump 230, and a fifth valve 252 is installed at a second inlet of the venturi pipe 250 into which outside air is introduced by a negative pressure, it is preferable from the viewpoint that a magnitude of the lift force generated in the plurality of micropores can be adjusted by adjusting an opening degree of the first, third, fourth or fifth valve.

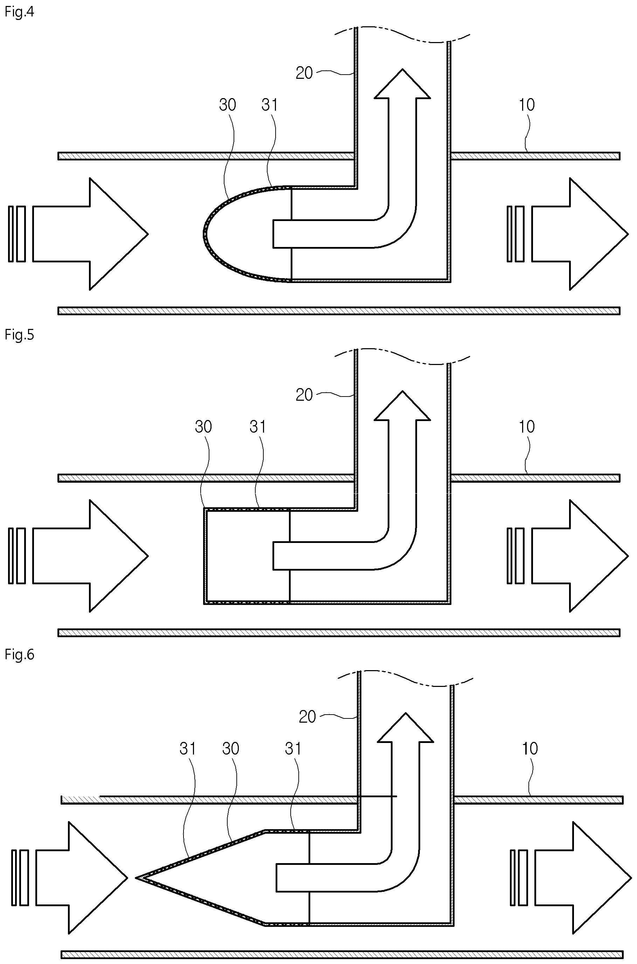

Although the filter portion 30 of the filter assembly 100 is described as being conical in the above-described embodiment, the present invention is not limited thereto, and as another embodiment, as shown in FIG. 4, the filter portion 30 may have a dome shape, as shown in FIG. 5, a tubular shape having a plurality of micropores 31 formed in a periphery thereof, or as shown in FIG. 6, a combination type in which a conical portion and a tubular portion are coupled to each other.

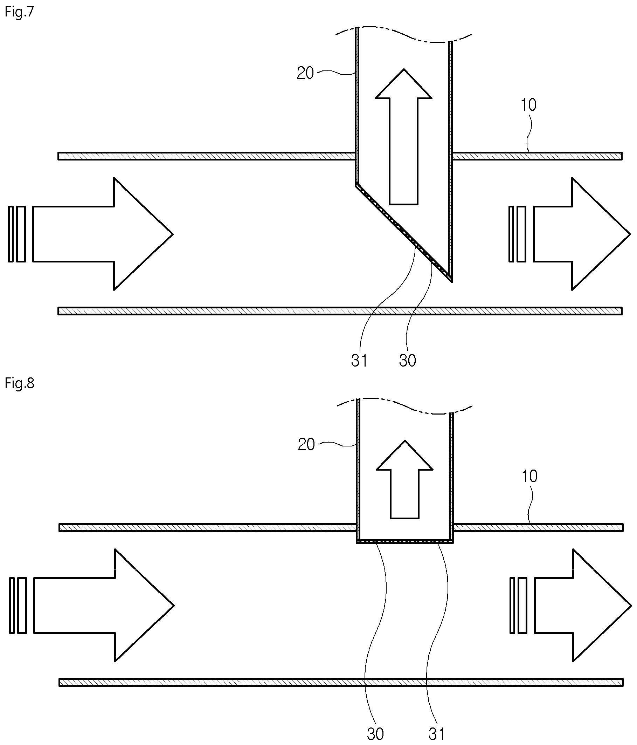

Although the branch pipe 20 is described as being connected to the flow pipe 10 in the form of a pitot tube, that is, the upstream end of the branch pipe 20 is connected to the flow pipe 10 in such a manner that the upstream end of the filtering pipe 20 extends parallel to the direction in which the fluid flows in the above-described embodiment, but the present invention is not limited thereto. As another embodiment, as shown in FIG. 7, in a state in which the upstream end of the branch pipe 20 extends perpendicularly to the direction in which the fluid flows in the flow pipe 10, the filter 32 of the filter portion 30 is formed in a plate shape to be installed on the upstream end of the branch pipe 20 to be inclined in the direction in which the fluid flows.

Further, as another embodiment, as shown in FIG. 8, in a state in which the upstream end of the branch pipe 20 extends perpendicularly to the direction in which the fluid flows in the flow pipe 10, the filter 32 of the filter portion 30 is formed in a plate shape and installed at the upstream end of the branch pipe 20 in parallel to the direction in which the fluid flows.

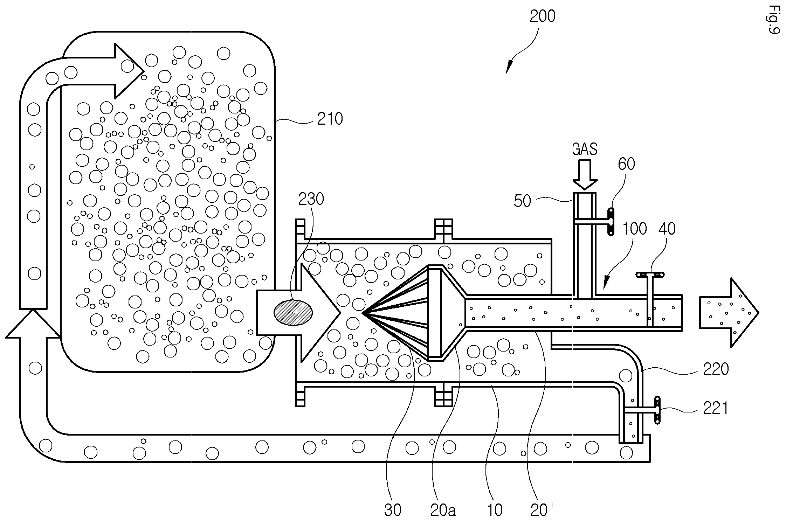

Further, in the filter assembly 100 of the above-described embodiment, the branch pipe 20 is described as being connected to a portion of the flow pipe 10 in the form of the L-shaped pitot tube, but the present invention is not limited thereto, and as shown in FIG. 9, a straight tube type branch pipe 20' can be substituted for the L-shaped pitot tube type branch pipe 20. Here, an upstream end of the branch pipe 20' can be communicably inserted into the flow pipe 10 and a downstream end of the branch pipe 20' communicably connected to the filtered fluid storage tank (not shown) can be disposed outside the flow pipe 10. Also, in a state in which the first valve 40 is disposed at the downstream end of the branch pipe 20', the downstream end of the gas supply pipe 50 can be communicably connected to a downstream end portion of the branch pipe 20' positioned on the upstream side of the first valve 40, the upstream end of the gas supply pipe 50 can be communicably connected to the gas supply source (not shown), and the second valve 60 can be interposed in a part of the gas supply pipe 50.

Further, in the above-described embodiments, the conical filter portion 30 is described as being communicably connected to the upstream end of the branch pipe 20 directly, but the present invention is not limited thereto, and as another embodiment, as shown in FIG. 9, in order to minimize the flow resistance of the fluid, the upstream end of the branch pipe 20' is provided with a contraction pipe 20a having a size that gradually decreases toward the downstream end thereof so that the conical filter portion 30 can be communicably connected thereto.

In the above-described embodiments, only the pump 230 and the flow pipe 10 of the filter assembly 100 are described as being sequentially connected in a portion of the circulation line 220 in the direction in which the fluid flows, but the present invention is not limited thereto, and as shown in FIG. 9, a third valve 221 can be interposed in a portion of the circulation line 220 positioned on a downstream side of the flow pipe 10 to regulate a flow rate and a pressure of the filtered fluid discharged through the first valve 40.

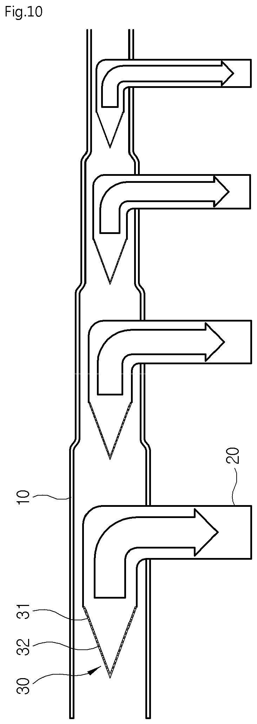

In addition, in the above-described embodiments, in a state in which the flow pipe 10 has the same size through the entire length and one L-shaped pitot tube type branch pipe 20 is interposed in a portion of the flow pipe 10, the conical filter 32 is described being installed at the upstream end of the one branch pipe 20, but the present invention is not limited thereto. As shown in FIG. 10, in a state in which the flow pipe 10 is formed by connecting a plurality of partial flow pipes having sizes which are gradually reduced from the upstream side to the downstream side, each of a plurality of branch pipes 20 is interposed in a portion of each of the plurality of partial flow pipes. In addition, the plurality of branch pipes 20 and a plurality of conical filters 32 installed at each of the upstream ends of the plurality of branch pipes 20 have sizes and shapes to form an unfiltered flow path for a fluid containing foreign substances which flow at the upstream end of the plurality of partial flow pipes and do not pass through the plurality of filters 32 and a filtered flow path for a fluid from which foreign substances are filtered. In the filter assembly of the embodiment of FIG. 10, since the filtered fluid passes through the branch pipe, it is preferable from the viewpoint that a constant flow rate can be stably maintained through the entire length of the flow pipe.

In addition, if the plurality of conical filters 32 installed in the filter assembly of the embodiment of FIG. 10 have a plurality of micropores 31 having the size different to each other, particles in the fluid can be separated and discharged by size.

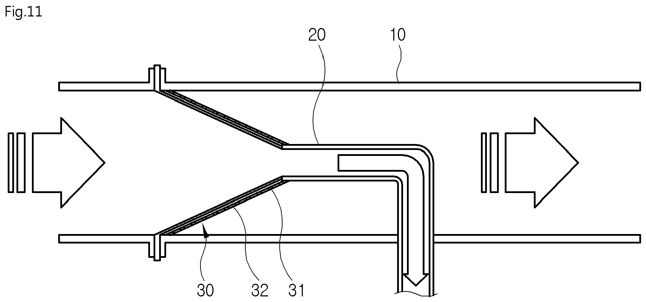

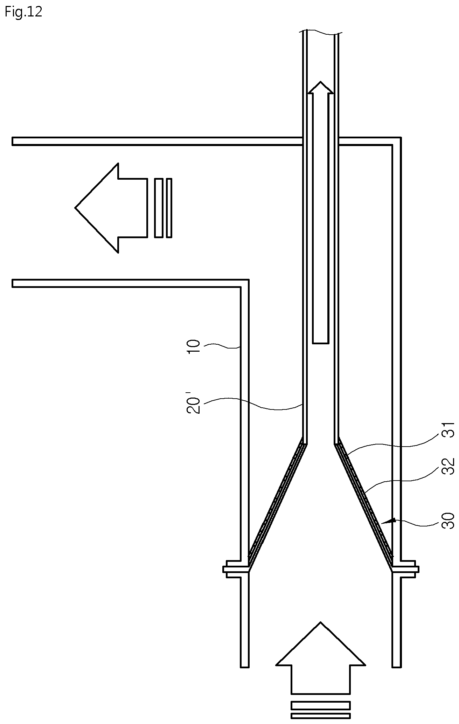

In addition, in the above-described embodiments, the filter 32 is described being mounted only on the branch pipe 20, but as shown in FIG. 11, the filter 32 has a taper shape of which a size is gradually reduced from the upstream end to the downstream end, the upstream end thereof is fixed to the flow pipe 10, the downstream end thereof is fixed to the upstream end of the branch pipe 20, and a plurality of micropores 31 can be formed on a peripheral surface thereof. If the downstream end of the flow pipe 10 is bent from the state of FIG. 11, as shown in FIG. 12, the branch pipe 20 is not interposed in the L-shaped pitot tube type in a portion of the flow pipe 10, and becomes a straight tube type branch pipe 20'. Therefore, a downstream end of the branch pipe 20' may pass through a bending portion of the flow pipe 10.

Although the present invention has been described in connection with the consideration of the above-described embodiments, it is obvious that the invention may include various filters and a filter assembly containing the filters within the spirit and scope of the present invention to cover all modifications and equivalents without being limited to the embodiments described above.

## Claims

1. A filter assembly comprising:
a flow pipe through which a fluid containing solid foreign substances flows;
a branch pipe that has a size smaller than a size of the flow pipe and is interposed in a portion of the flow pipe in a state in which an upstream end is disposed inside the flow pipe 10 and a downstream end is disposed outside the flow pipe 10, to form two flow paths separated to each other in conjunction with the flow pipe; and
a filter that includes a plurality of openings which are micropores being open in a thickness direction thereof and having a taper shape with a size which gradually decreases from upstream ends to downstream ends, is installed at the upstream end of the branch pipe, and is interposed in one of the two flow paths, in a state of being disposed to extend parallel to or inclined with respect to a direction in which the fluid containing the solid foreign substances flows at an upstream end of the flow path.

2. The filter assembly according to claim 1,
wherein if the filter is installed at the upstream end of the branch pipe extending parallel to the direction in which the fluid flows, the filter has a hollow conical shape or a dome shape, a base end thereof is installed at the upstream end of the branch pipe, in a state in which a vertex portion thereof is disposed on an upstream side in the direction in which the fluid flows and the openings which are the plurality of micropores are formed in a peripheral wall; a tubular shape of which a base end is installed at the upstream end of the branch pipe in a state in which the openings which are the plurality of micropores are formed in a peripheral wall; a combination type in which the conical shape and the tubular shape are sequentially coupled to each other in the direction in which the fluid flows; or a taper shape where the openings which are the plurality of micropores are formed in a peripheral wall in a state in which an upstream end is fixed to the flow path, a downstream end is fixed to the branch pipe, and a size gradually decreases from the upstream end to the downstream end; or
wherein if the filter is installed at the upstream end of the branch pipe extending perpendicular to the direction in which the fluid flows, the filter has a plate shape extending to be parallel or inclined to the direction in which the fluid flows.

3. The filter assembly according to claim 1,
wherein the flow pipe is communicably interposed in a portion of a transfer pipe through which the fluid containing the solid foreign substances is transferred,
wherein a first valve is disposed at a downstream end of the branch pipe disposed outside the flow pipe,
wherein a downstream end of a gas supply pipe is communicably connected to the downstream end of the branch pipe positioned on an upstream side of the first valve and an upstream end of the gas supply pipe is communicably connected a gas supply source, and
wherein a second valve is interposed in a portion of the gas supply pipe.

4. The filter assembly according to claim 3,
wherein a pump and the flow pipe of the filter assembly are sequentially interposed, in the direction in which the fluids flows, in a portion of a circulation line having an upstream end communicably connected to a lower portion of a fluid storage tank and a downstream end communicably connected to an upper portion of the fluid storage tank,
wherein a filtered fluid storage tank is connected to the downstream end of the branch pipe, and
wherein a third valve is interposed in a portion of the circulation line positioned on a downstream side of the flow pipe.

5. The filter assembly according to claim 2,
wherein in a state in which the flow pipe is formed by connecting a plurality of partial flow pipes having sizes which are gradually reduced from the upstream side to the downstream side, each of a plurality of branch pipes are interposed in a portion of each of the plurality of partial flow pipes, and
wherein the plurality of branch pipes and a plurality of conical filters each installed at each of the upstream ends of the plurality of branch pipes have sizes and shapes to form an unfiltered flow path for a fluid containing foreign substances which flow through the upstream end of the plurality of partial flow pipes and do not pass through the plurality of filters and a filtered flow path for a fluid from which foreign substances are filtered.

6. The filter assembly according to claim 4,
wherein a venturi pipe is interposed between the pump and the flow pipe, and
wherein a fourth valve is installed at a first inlet of the venturi pipe connected to a discharge side of the pump, and a fifth valve is installed at a second inlet of the venturi pipe into which outside air is introduced by a negative pressure.
